# EUROPÄISCHE PATENTSCHRIFT

(11) **EP 0 911 931 B1**
(45) Veröffentlichungstag und Bekanntmachung des Hinweises auf die Patenterteilung: **23.09.2009**
(21) Anmeldenummer: 98119351.9
(22) Anmeldetag: 14.10.1998
(51) Int. Cl.: H02B 1/052

(54) **Befestigungsvorrichtung für die Befestigung eines Gerätes an einer Tragschiene**
Fastening device of an apparatus to a rail
Dispositif de fixation d'un appareillage sur un rail

(30) Priorität: 27.10.1997 DE 19747397
(43) Veröffentlichungstag der Anmeldung: 28.04.1999
(73) Patentinhaber: ROBERT BOSCH GMBH, 70442 Stuttgart (DE)
(72) Erfinder: Schwoebel, Herbert, 64711 Erbach (DE); Krajc, Adolf, 64711 Erbach (DE)
(74) Vertreter: Thürer, Andreas

(56) Entgegenhaltungen:
- DE-U- 8 624 150
- FR-A- 2 269 839
- GB-A- 1 530 191

## Beschreibung

### Hintergrund der Erfindung

Die Erfindung befaßt sich mit einer Vorrichtung zur Befestigung eines ein Gehäuse aufweisenden Gerätes an einer Tragschiene, die zwei einander gegenüberliegende Befestigungskanten aufweist, um die ein damit korrespondierender Befestigungsmechanismus des Gerätegehäuses zumindest formschlüssig greift.

### Stand der Technik

Derartige Befestigungsvorrichtungen für die Befestigung elektronischer Geräte sind auf dem elektronischen Gerätebau weitgehend handelsüblich, z.B. zur Befestigung von modularen Geräten in Geräteschränken, insbesondere von E/A-Geräten der Nachrichtenverarbeitung. Diese bekannten Lösungen lassen sich nur mit Hilfsmitteln, wie Klammern, Klemmen, Schrauben oder zusätzlichen Handhabungsmechanismen befestigen und lösen. Diese zusätzlichen Teile müssen extra bereitgestellt werden, was die Herstellungs- und Wartungskosten verteuert.

Die GB 1 530 191 beschreibt eine Befestigungsvorrichtung zur Befestigung an U-profilartigen Befestigungsschienen, wobei die Vorrichtung flexibel an Befestigungsschienen dreier in ihren Dimensionen verschiedener Industriestandards angepasst werden kann.

Die FR 2 269 839 offenbart eine Befestigungsvorrichtung eines Gerätegehäuses.

In der DE 86 24 150 wird ein Vorratsbehälter zur Befestigung an einer Schnellbefestigungsschiene beschrieben. Der Vorratsbehälter wird mit Eingreifhaken an der Oberseite der Rückwand des Gehäuses und dem an einer Blattfeder der Unterseite angebrachten Eingreifhaken auf der Schnellbefestigungsschiene gehalten.

### Kurzfassung der Erfindung

Es ist somit Aufgabe der Erfindung, eine einfache und kostengünstige Befestigungsvorrichtung für die Befestigung eines ein Gehäuse aufweisenden Gerätes an eine Tragschiene derart zu ermöglichen, daß keine zusätzlichen Hilfsmittel oder Handhabungsmechanismen nötig sind.

Eine gattungsgemäße Befestigungsvorrichtung ist erfindungsgemäß dadurch gekennzeichnet, daß der Befestigungsmechanismus in ein erstes Teil des Gerätegehäuses integriert ist und ein zweites Gehäuseteil derart ausgebildet ist, daß es bei geschlossenem Gehäuse und im befestigten Zustand des Gerätes an wenigstens einer der Befestigungskanten anliegt und Andruckmittel in Form einer Sicke derart aufweist, daß diese Sicke von unter an die Tragschiene drückt und die Andruckmittel zusätzlich einen kraftschlüssigen Angriff des Befestigungsmechanismus' an wenigstens einer der Befestigungskanten bewirken.

Bevorzugt ist die Tragschiene so ausgebildet, daß ihre Befestigungskanten über die gesamte Breite des Gerätegehäuses parallel verlaufen und in einer Ebene liegen; die Andruckmittel sind bevorzugt einstückig mit dem zweiten Gehäuseteil und in Form einer an eine der Befestigungskanten der Tragschiene andrückenden Schrägfläche gebildet, so daß der Befestigungsmechanismus, wenn der zweite Gehäuseteil im befestigten Zustand an einer der Befestigungskanten anliegt, aufgrund des durch diese Schrägfläche bewirkten Drucks kraft- und formschlüssig um die beiden Befestigungskanten greift.

Auf diese Weise ist ein ungewolltes Lösen der Befestigungsvorrichtung ausgeschlossen. Ferner wird damit erreicht, daß das Gerätegehäuse nur im geschlossenen Zustand an der Tragschiene befestigt werden kann. Bevorzugt hat das Gerätegehäuse Quaderform, wobei das erste und das zweite Gehäuseteil in zueinander senkrecht stehenden Ebenen liegen.

Der mit dem Gerätegehäuse einstückige Befestigungsmechanismus besteht aus wenigstens einem Paar von einander gegenüberliegenden Rasthaken, die jeweils mit zu den Befestigungskanten der Tragschiene offenen Rastschlitzen im Abstand der beiden Befestigungskanten versehen sind.

Weiterhin bevorzugt sind die beiden Gehäuseteile einstückig miteinander und bestehen aus Metallblech, und die Schrägfläche ist in Form wenigstens einer Sicke im zweiten Gehäuseteil gebildet.

Eine solche Sicke kann, wie bevorzugt, aus zwei voneinander längs einer der Befestigungskanten der Tragschiene beabstandeten Kugelnäpfen bestehen.

In der bevorzugten Ausführungsform weist der Befestigungsmechanismus des quaderförmigen Gerätegehäuses zwei Rasthakenpaare an den zwei einander gegenüberliegenden parallelen Seitenwänden des Gehäuses auf, und die Sicken bzw. Kugelnäpfe sind an einem Bodenteil des Gehäuses ausgebildet.

### Bevorzugte Ausführungsform

Nachstehend wird eine bevorzugte Ausführungsform der Erfindung bezugnehmend auf die Zeichnung näher beschrieben.
Fig. 1 zeigt schematisch in Seitenansicht eine der an der Befestigungsschiene befestigten erfindungsgemäß gestalteten Seitenwände des Gehäuses und ein in einem Kreis vergrößert dargestelltes Detail X in Draufsicht.
Fig. 2 zeigt ebenfalls in Seitenansicht ein Gerätegehäuse mit daran ausgebildetem Befestigungsmechanismus gemäß der Erfindung.

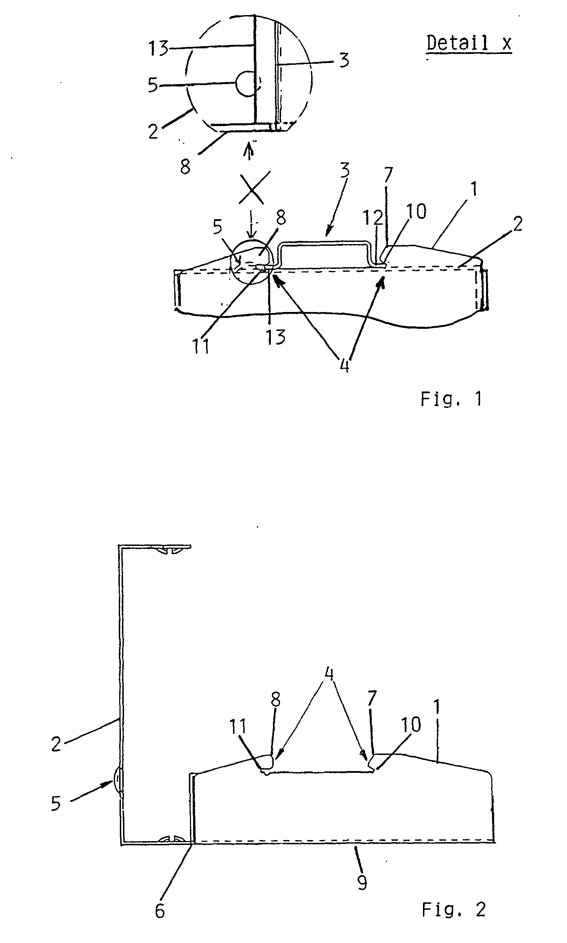

Aus Fig. 1, die in Seitenansicht einen Teil eines Gerätegehäuses, nämlich eine ein erstes Gehäuseteil bildende Seitenwand 1 zeigt, ist ersichtlich, daß an dieser Seitenwand 1 ein Befestigungsmechanismus 4 aus von zwei Rasthaken 7 und 8 gebildet ist, die durch einander gegenüberliegende Aussparungen oder Schlitze 10 und 11 in der Seitenwand 1 definiert sind. Diese Rasthaken 7, 8 greifen um parallele und in einer Ebene liegende Kanten 12, 13 einer Befestigungsschiene 3.

Obwohl dies in den Figuren nicht gezeigt ist, weist das Gerätegehäuse zwei voneinander beabstandete parallele Seitenwände 1 jeweils mit einem gleichen solchen Befestigungsmechanismus 4 auf. Die Tragschiene 3 erstreckt sich mit ihren Kanten 12, 13 zumindest über die Gehäusebreite, d.h. von der einen Seitenwand 1 bis zur anderen Seitenwand 1 des Gehäuses.

In dem durch einen Kreis umrahmten Ausschnitt X ist eine als Andruckmittel dienende Sicke, d.h. ein Kugelnapf 5, zu erkennen, der an einem zweiten Gehäuseteil 2 nach oben so ausgeformt ist, daß er mit einer Schrägfläche unter der links gezeichneten Befestigungskante 13 der Tragschiene 3 zu liegen kommt und Druck auf diese ausübt, so daß der Befestigungsmechanismus 4 auch kraftschlüssig an den Befestigungskanten 10, 11 der Tragschiene 3 angreift.

Die in Fig. 1 dargestellte Detailansicht X zeigt vergrößert eine Draufsicht auf das als Gehäuseboden 2 des Gerätegehäuses fungierende zweite Gehäuseteil mit dem Kugelnapf 5, wie oben beschrieben. Dieser Gehäuseboden 2 drückt mit dem nach oben ausgeformten Kugelnapf 5 von unten an die Tragschiene 3 und damit die in dem Schlitz 11 liegende linke Befestigungskante 13 von unten an den Rasthaken 8 an.

Obwohl dies in den dargestellten Figuren nicht ersichtlich ist, sind im Gehäuseboden 2 bevorzugt zwei Kugelnäpfe 5 im Abstand voneinander ausgebildet, so daß sich zwei Andruckpunkte an die Befestigungskante 13 der Tragschiene 3 ergeben. Diese zwei Kugelnäpfe 5 drücken ständig über ihre Schrägfläche an die Befestigungskante 13 der Tragschiene 3 an und verhindern damit, daß die Tragschiene aus den Rasthaken 7, 8 in den Seitenwänden des Gehäuses herausspringen kann.

Aus Fig. 2, die ebenfalls eine Seitenansicht auf das Gerätegehäuse und auf den daran vorgesehenen Befestigungsmechanismus 4 in Form der Rasthaken 7, 8 zeigt, ersieht man zunächst, daß der vor der Befestigung des Gerätegehäuses an der Tragschiene in senkrechter Position befindliche Gehäuseboden 2 einstückig mit den sonstigen Gehäuseteilen ist. Der Gehäuseboden 2 steht über eine Biegelinie 6 mit dem restlichen Gehäuse, d.h. mit den Seitenwänden und dem Gehäusedeckel 9 in Verbindung. Wie dies bei Metallblechgehäusen üblich ist, kann eine solche Biegelinie 6 durch eine Reihe linearer Schlitze realisiert sein.

Zur Befestigung und zum Schließen des Gerätegehäuses wird der Gehäuseboden 2 um die Biegelinie 6 nach oben und rechts gebogen und nimmt dann die in Fig. 1 angedeutete Position ein, und danach kann das Gehäuse an der Tragschiene 3 befestigt werden, indem deren Befestigungskanten 12, 13 in die Schlitze 10, 11 der Rasthaken 7, 8 gesteckt werden. Dabei drücken, wie schon erwähnt, die Kugelnäpfe 5 im Bodenteil 2 von unten gegen die Befestigungskante 13, so daß auch ein kraftschlüssiger Angriff der Rasthaken 7, 8 an den parallelen Befestigungskanten 12, 13 bewirkt ist.

Die Figuren zeigen auch, daß die beiden Teile des Befestigungsmechanismus' 4, d.h. der rechte Rasthaken 7 und der rechte Schlitz 10 sowie der linke Rasthaken 8 und der linke Schlitz 11 in jeweils unterschiedlichen Formen ausgebildet sind. So weist der rechte Rasthaken 7 eine schräge Kante auf und der linke Schlitz 11 eine nicht weiter bezeichnete Ausweitung in Richtung zum Gehäusedeckel 9 hin. Diese unterschiedliche Ausbildung des linken und rechten Teils des Befestigungsmechanismus 4 erleichtert sowohl die Befestigung als auch das Lösen des Geräts, respektive des Gerätegehäuses, an bzw. von der Tragschiene 3. Zum Lösen wird der Bodenteil 2 des Gerätegehäuses mit den Kugelnäpfen 5 in der in Fig. 1 dargestellten Position nach unten gedrückt oder gezogen, so daß die Schrägfläche der Kugelnäpfe 5 von der Unterseite der Befestigungskante 13 der Tragschiene 3 abrückt und keine Kraft mehr ausüben und dann das Gehäuse leicht von der Tragschiene 3 gelöst werden kann.

Zu bemerken ist noch, daß der gegenseitige Abstand der Befestigungskanten 12, 13 der Tragschiene 3 etwas kleiner sein muß als der seitliche Abstand der hinteren Kanten der Schlitze 10, 11, damit der Befestigungsmechanismus 4 an der Tragschiene 3 in der oben beschriebenen Weise leicht befestigbar und von der Tragschiene 3 lösbar ist.

In der obigen Beschreibung wurde eine Tragschiene 3 beschrieben, die bei der bevorzugten Ausführungsform zwei in einer Ebene liegende parallele und nach außen ragende Befestigungskanten 12, 13 aufweist. Bei einer alternativen Ausführungsform kann auch eine Tragschiene mit in die gleiche Richtung oder mit nach innen weisenden Befestigungskanten und/oder mit in unterschiedlichen Ebenen liegenden Befestigungskanten verwendet werden. Selbstverständlich muß dann der Befestigungsmechanismus in den Seitenwänden 1 des Gerätegehäuses entsprechend gestaltet sein, wobei jedoch die erfindungsgemäße Prinzipien erhalten bleiben.

Obwohl bei der oben beschriebenen bevorzugten Ausführungsform kugelnapfförmig ausgebildete Sicken 5 im Gehäuseboden 2 bevorzugt werden, können genauso andersartige, eine entsprechende Schrägfläche aufweisenden Sicken verwendet werden. Eine solche Sicke kann z.B. auch in Form einer rillenförmigen durchgehenden Sicke ausgebildet sein.

Ferner können bei alternativer Ausführung auch Schrägflächen oder Sicken an Positionen unterhalb der anderen Befestigungskante der Tragschiene ausgebildet sein.

Obwohl bei der oben beschriebenen bevorzugten Ausführungsform das Gerätegehäuse bevorzugt aus einem einstückigen Blech geformt ist, kann in alternativer Ausführung das Gerätegehäuse auch mehr Teile beinhalten. Statt der Biegelinie 6 kann auch ein Scharnier Verwendung finden.

## Patentansprüche

1. Befestigungsvorrichtung für die Befestigung eines ein Gehäuse (1, 2) aufweisenden Gerätes in einer Tragschiene (3), die zwei parallele, einander gegenüberliegende Befestigungskanten (12, 13) aufweist, um die ein damit korrespondierender Befestigungsmechanismus (4) des Gerätegehäuses zumindest formschlüssig greift,
**dadurch gekennzeichnet, dass** der Befestigungsmechanismus in ein erstes Teil (1) des Gerätegehäuses integriert ist und ein zweites Gehäuseteil (2) derart ausgebildet ist, dass es bei geschlossenem Gehäuse und im befestigten Zustand des Gerätes an wenigstens einer der Befestigungskanten (12, 13) anliegt und Andruckmittel (2, 5) **in Form wenigstens einer Sicke** derart aufweist, dass **die Sicke von unten an die Tragschiene (3) drückt und** diese **Andruckmittel** zusätzlich einen kraftschlüssigen Angriff des Befestigungsmechanismus (4) an wenigstens einer der Befestigungskanten (12, 13) bewirken.

2. Befestigungsvorrichtung nach Anspruch 1, **dadurch gekennzeichnet, daß** die beiden Befestigungskanten (12, 13) der Tragschiene (3) über die gesamte Breite des Gerätegehäuses (1, 2) parallel verlaufen und in einer Ebene liegen,
daß die Andruckmittel (2, 5) einstückig mit dem zweiten Gehäuseteil (2) und in Form einer an eine der Befestigungskanten der Tragschiene (3) andrückenden Schrägfläche so gebildet sind,
daß der Befestigungsmechanismus (4) aufgrund des durch diese Schrägfläche bewirkten Drucks kraft- und formschlüssig um die beiden Befestigungskanten (12, 13) greift.

3. Befestigungsvorrichtung nach Anspruch 1 oder 2, **dadurch gekennzeichnet, daß** das erste und zweite Gehäuseteil (1, 2) in zueinander senkrecht stehenden Ebenen liegen.

4. Befestigungsvorrichtung nach einem der vorangehenden Ansprüche, **dadurch gekennzeichnet, daß** der Befestigungsmechanismus des Gerätegehäuses wenigstens ein Paar einander gegenüberliegender Rasthaken (7, 8) mit zu den Befestigungskanten (12, 13) der Tragschiene (3) offenen Rastschlitzen (10, 11) im Abstand der beiden Befestigungskanten (12, 13) aufweist.

5. Befestigungsvorrichtung nach einem der vorangehenden Ansprüche, **dadurch gekennzeichnet,dass** die beiden Gehäuseteile (1, 2) miteinander einstückig ausgebildet sind und aus Metallblech bestehen.

6. Befestigungsvorrichtung nach Anspruch 5, **dadurch gekennzeichnet, daß** zwei voneinander längs der einen Befestigungskante (12, 13) beabstandete und als Kugelnäpfe geformte Sicken (5) vorgesehen sind.

7. Befestigungsvorrichtung nach Anspruch 6, **dadurch gekennzeichnet, daß** zwei Paare von Rasthaken (7, 8) an zwei einander gegenüberliegenden parallelen Seitenwänden (1) des Gehäuses vorgesehen sind, und daß die Sicken (5) an einem Bodenteil (2) des Gehäuses gebildet sind.

8. Gerät, **gekennzeichnet durch** die Verwendung der Befestigungsvorrichtung nach einem der vorangehenden Ansprüche.

## Claims

1. Fixing apparatus for fixing a device, which has a housing (1, 2), in a mounting rail (3) which has two parallel fixing edges (12, 13) which are opposite one another and are surrounded, at least in an interlocking manner, by a corresponding fixing mechanism (4) of the device housing,
**characterized in that** the fixing mechanism is integrated in a first part (1) of the device housing and a second housing part (2) is designed in such a way that, when the housing is closed and the device is in the fixed state, the said second housing part rests against at least one of the fixing edges (12, 13) and has contact-pressure means (2, 5) in the form of at least one bead in such a way that the bead presses against the mounting rail (3) from below and these contact-pressure means additionally cause the fixing mechanism (4) to act in an interlocking manner on at least one of the fixing edges (12, 13).

2. Fixing apparatus according to Claim 1, **characterized in that** the two fixing edges (12, 13) of the mounting rail (3) run parallel and lie in one plane over the entire width of the device housing (1, 2),
**in that** the contact-pressure means (2, 5) are formed with the second housing part (2) in an integral manner and in the form of an inclined surface which presses against one of the fixing edges of the mounting rail (3) such
that the fixing mechanism (4) surrounds, in a force-fitting and interlocking manner, the two fixing edges (12, 13) on account of the pressure produced by the said inclined surface.

3. Fixing apparatus according to Claim 1 or 2, **characterized in that** the first and second housing parts (1, 2) lie in planes which are perpendicular to one another.

4. Fixing apparatus according to one of the preceding claims, **characterized in that** the fixing mechanism of the device housing has at least one pair of latching hooks (7, 8) which are situated opposite one another and have latching slots (10, 11), which are open to the fixing edges (12, 13) of the mounting rail (3), at a distance from the two fixing edges (12, 13).

5. Fixing apparatus according to one of the preceding claims, **characterized in that** the two housing parts (1, 2) are of integral design and comprise sheet metal.

6. Fixing apparatus according to Claim 5, **characterized in that** two beads (5) are provided, which beads are spaced apart from one another along one fixing edge (12, 13) and are in the form of ball-like cups.

7. Fixing apparatus according to Claim 6, **characterized in that** two pairs of latching hooks (7, 8) are provided on two parallel side walls (1) of the housing which are situated opposite one another, and **in that** the beads (5) are formed on a base part (2) of the housing.

8. Device, **characterized by** the use of the fixing apparatus according to one of the preceding claims.

## Revendications

1. Dispositif de fixation pour fixer un appareil comportant un boîtier (1, 2) sur un rail de support (3) ayant deux arêtes de fixation (12, 13), parallèles, se faisant face, autour desquelles un mécanisme de fixation (4) du boîtier de l'appareil, correspondant est en prise au moins par une liaison par la forme,
**caractérisé en ce que**
le mécanisme de fixation est intégré dans une première partie (1) du boîtier de l'appareil et une seconde partie (2) du boîtier est réalisée pour que si le boîtier est fermé et que l'appareil est à l'état fixé elle s'applique contre au moins l'une des arêtes de fixation (12, 13) et comporte des moyens de pression (2, 5) sous la forme d'au moins une moulure de façon que la moulure pousse par en dessous contre le rail de support (3) et que ces moyens de pression assurent en outre une prise par une liaison par la force du mécanisme de fixation (4) sur au moins l'une des arêtes de fixation (12, 13).

2. Dispositif de fixation selon la revendication 1,
**caractérisé en ce que**
les deux arêtes de fixation (12, 13) du rail de support (3) sont parallèles sur toute la largeur du boîtier (1, 2) de l'appareil et se situent dans un plan,
les moyens de pression (2, 5) sont formés en une seule pièce avec la seconde partie (2) du boîtier et ont la forme d'une surface inclinée se pressant contre l'une des arêtes de fixation du rail de support (3),
le mécanisme de fixation (4) est en prise par une liaison par la forme, et par la force autour des deux arêtes de fixation (12, 13) grâce à la poussée produite par cette surface inclinée.

3. Dispositif de fixation selon la revendication 1 ou 2,
**caractérisé en ce que**
la première et la seconde partie (1, 2) du boîtier sont situées dans des plans perpendiculaires l'un à l'autre.

4. Dispositif de fixation selon l'une des revendications précédente,
**caractérisé en ce que**
le mécanisme de fixation du boîtier de l'appareil comporte au moins une paire de crochets de fixation (7, 8) qui se font face, avec des fentes d'accrochage (10, 11) ouvertes en direction des arêtes de fixation (12, 13) du rail de support (3), ces fentes d'accrochage étant à distance des deux arêtes de fixation (12, 13).

5. Dispositif de fixation selon l'une des revendications précédentes,
**caractérisé en ce que**
les deux parties (1, 2) du boîtier sont réalisées en une seule pièce en tôle métallique.

6. Dispositif de fixation selon la revendication 5,
**caractérisé par**
deux moulures (5) écartées l'une de l'autre le long d'une arête de fixation (12, 13) et ayant la forme de têtes de rotules.

7. Dispositif de fixation selon la revendication 6,
**caractérisé en ce que**
deux paires de crochets de fixation (7, 8) sont prévues sur deux parois latérales (1), parallèles du boîtier, qui se font face, et
les moulures (5) sont réalisées sur une pièce de fond (2) du boîtier.

8. Appareil **caractérisé ce qu'**il utilise le dispositif de fixation selon l'une des revendications précédentes.
